# FASCICULE DE BREVET EUROPEEN

(11) **EP 2 582 446 B1**
(45) Date de publication et mention de la délivrance du brevet: **31.05.2017**
(21) Numéro de dépôt: 11726120.6
(22) Date de dépôt: 10.06.2011
(51) Int. Cl.: B01D 53/26, C01B 32/50, F25J 3/06

(54) **PROCEDE ET APPAREIL DE SECHAGE ET DE COMPRESSION D'UN FLUX RICHE EN CO2**
VERFAHREN UND VORRICHTUNG ZUM TROCKNEN UND KOMPRIMIEREN EINES CO2 REICHEN STOFFSTROMS
PROCESS AND APPARATUS FOR DRYING AND COMPRESSION OF A CO2 RICH STREAM

(30) Priorité: 11.06.2010 FR 1054640
(43) Date de publication de la demande: 24.04.2013
(73) Titulaire: L'Air Liquide Société Anonyme pour l'Etude et l'Exploitation des Procédés Georges Claude, 75007 Paris (FR)
(72) Inventeur: BRIGLIA, Alain, F-49140 Corze (FR); COURT, Philippe, F-94300 Vincennes (FR); DARDE, Arthur, F-75005 Paris (FR)
(74) Mandataire: Mercey, Fiona Susan
(86) Numéro de dépôt international: PCT/EP2011/059724
(87) Numéro de publication internationale: WO 2011/154536

(56) Documents cités:
- WO-A1-2009/127217
- US-A- 4 599 096
- US-A1- 2003 045 756

## Description

La présente invention est relative à un procédé et à un appareil de séchage et de compression d'un flux riche en CO₂.

La compression de flux riches en CO₂ et humides nécessite l'utilisation de compresseur en acier inoxydable - voire en matériaux plus nobles encore, comme les aciers à haute teneur en nickel - afin d'éviter la corrosion par l'acide carbonique, ou d'autres acides plus forts qui découleraient de la présence d'impuretés dans le flux riche en CO₂, comme les oxydes d'azote ou de soufre.

Un fluide riche en CO₂ contient entre 1 % molaire et 100 % molaire en base sèche de CO₂, de préférence entre 30 et 100% molaire en base sèche de CO2. L'air ambiant est 25 fois plus pauvre en CO₂ que la limite basse de 1% molaire.

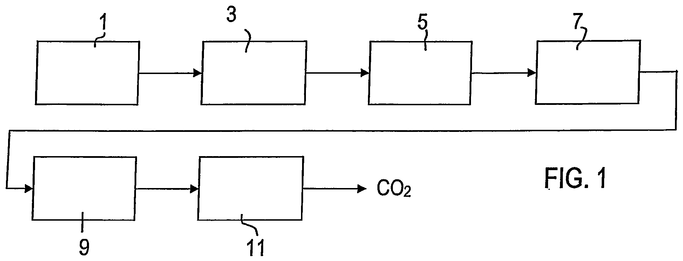

C'est ainsi que l'état de l'art pour le traitement de tels flux riches en CO₂ est schématiquement représenté comme sur la figure 1.
- 1 = Mise à disposition du flux riche en CO₂ (exemples : sortie d'une colonne de régénération d'un solvant (type amines) ou fumées d'oxycombustion après un filtre primaire de type électrostatique ou de filtre à manche)
- 3 = étape facultative d'épuration fine (jusqu'à un niveau typique de l'ordre de la partie par million) en élément soufrés
- 5 = compression dans un compresseur dont les matériaux en contact avec le gaz humide sont en acier résistant à la corrosion
- 7 = séchage du gaz par adsorption (par exemple adsorbant de type alumine activée, tamis moléculaire, silica-gel)
- 9 = épuration facultative du gaz riche en CO₂ de ses constituants légers (oxygène, argon, hydrogène, monoxyde de carbone, azote, etc) et/ou de ses constituants plus lourds (NO₂, N₂O₄, SO₂, etc.), les variantes possibles de cette étape sont abondamment décrites dans de précédentes demandes de brevet
- 11 = étape de compression du produit final riche en CO₂ ou de liquéfaction du produit final riche en CO₂ afin de le mettre à disposition d'un organe de transport (par canalisation ou bateau) ou pour son utilisation dans un procédé.
- WO-A-2009/127217 et US-A-4599096 décrivent respectivement les objets des préambules des revendications 1 et 8.

Selon l'invention, éventuellement :
- le compresseur est en acier carbone ou faiblement allié ;
- pour extraire une partie de l'eau du fluide humide, on refroidit le fluide jusqu'à la condensation d'un mélange comprenant entre autre de l'eau et de l'agent antigel, on produit un flux gazeux appauvri en eau contenant en quantité similaire de l'antigel et un flux liquide enrichi, par rapport au fluide initial, en eau et en agent antigel ;
- en aval du compresseur, on sépare le fluide comprimé à une température inférieure à 0°C et préférentiellement inférieure à -10°C sans l'avoir séché par adsorption avant de le refroidir sous 0°C ;
- on récupère des condensats riches en eau et en agent antigel lors de la séparation à une température inférieure à 0°C et préférentiellement inférieure à -10°C et on recycle l'agent antigel en amont de l'étape de refroidissement après extraction des condensats ;
- le fluide riche en CO₂ contient moins que 100ppm v, voire moins que 2000ppm v, ou même moins que 20000ppm v (par volume) d'oxydes de soufre.
- les moyens pour extraire l'eau du fluide refroidi peuvent être constitués par un séparateur de phases.

La présente invention vise à réduire considérablement le coût de l'unité de compression 5 et éventuelle unité de purification 3 du flux riche en CO₂ en retirant suffisamment d'eau en amont de l'étape de compression 5 pour éviter la condensation de celle-ci durant les phases de compression et refroidissement successives dans le compresseur, cela permettant l'utilisation d'acier carbone ou faiblement allié, au lieu d'acier inoxydable.

Un deuxième aspect de l'invention consiste à réduire le coût de l'unité de séchage 7 lorsqu'une purification par condensation partielle et éventuelle distillation est souhaitée pour améliorer la composition du CO₂ produit. Cette unité a pour vocation essentielle de retirer suffisamment d'eau du flux riche en CO₂ pour éviter le gel de cette eau lors du refroidissement dans l'unité 9. Des teneurs résiduelles en eau de l'ordre de la partie par million peuvent ainsi être nécessaires pour éviter le gel à -56°C, une température plancher en raison de la solidification du CO₂.

Dans un premier temps, considérons comment se passer de l'unité de séchage, tout en refroidissant à environ -55°C le flux riche en CO₂.

L'invention consiste à injecter un agent antigel - du méthanol par exemple - en quantité suffisante pour que le point de solidification de l'eau soit inférieur à la température la plus froide de l'unité 9 (par exemple pour un point de solidification de l'eau de - 54°C, il faut injecter au moins 1 kg de méthanol, pour 1 kg d'eau contenu dans le gaz) puis à refroidir le mélange jusqu'à la température souhaité.

Une amélioration consiste à refroidir le gaz contenant l'agent antigel jusqu'à une température intermédiaire, bien sûr supérieure à la température finale souhaitée, de telle façon qu'une fraction significative de l'eau, et de l'agent antigel contenu soit condensée et ainsi recyclée, limitant la consommation de l'agent antigel. Plus la température atteinte est froide, et plus la condensation de l'eau est importante. Le gaz résultant de cette condensation intermédiaire est refroidi ensuite jusqu'aux températures souhaitées pour la suite du procédé où intervient une nouvelle condensation d'eau et d'agent antigel.

On peut envisager une seconde injection d'agent antigel après cette première condensation selon les fractions résultantes d'eau et d'agent antigel dans la phase gazeuse. L'intérêt d'une injection multiple sera de réduire la quantité totale à injecter car chaque injection sera adaptée à la condensation qui suit. Le système devenant cependant plus complexe, une étude technico-économique jugera de l'intérêt de multiplier les injections d'agent antigel.

Une approche similaire permet de retirer suffisamment d'eau avant la compression pour utiliser un compresseur en acier carbone ou faiblement allié. Il s'agît donc de refroidir le flux riche en CO₂ jusqu'à ce que la fraction restante en eau assure que le point de rosée ne sera jamais atteint dans les différents étages de compression et refroidissement du compresseur. Ainsi un refroidissement à -15°C et 0.9 bar absolu d'un flux contenant environ 90% de CO₂ en volume et en base sèche permet d'abaisser le point de rosée à la sortie du compresseur (20 bars absolus dans notre exemple) à moins de 30°C, soit une température dont on peut facilement s'assurer qu'elle ne sera pas atteinte lors des refroidissements aux inter-étages et en sortie du compresseur. Un contrôle de la température du flux comprimé par régulation du débit d'eau de réfrigération en fonction de la température du gaz en sortie du réfrigérant est un exemple permettant de maintenir le flux comprimé au-delà du point de rosée et donc de la zone de corrosion.

Par rapport à l'existant, il faut donc ajouter des moyens d'injection d'un agent antigel dans le flux riche en CO₂, ainsi que des moyens de réfrigération poussée pour atteindre des températures de l'ordre de -15°C à faible pression (en générale une pression proche de la pression atmosphérique).

Les avantages de cette invention sont multiples :
- Le compresseur et les réfrigérants inter-étages sont donc en acier carbone ou faiblement allié.
- La température d'aspiration est notablement abaissée par rapport à l'état de l'art : entre une aspiration à 20°C et une aspiration à -15°C, le débit volumique - et donc la taille de la première roue de compression, qui définit la taille du compresseur, diminue de 7% si l'on considère 100mbars de perte de charge pour la réfrigération (de 1 bar absolu à 0.9bar a). Cela se traduit par un gain en investissement sur la machine.
- La température d'aspiration est stabilisée au cours de l'année, ce qui permet d'opérer exactement aux conditions de conception et donc d'améliorer l'efficacité moyenne de la machine.
- Le compresseur ne doit pas être dimensionné sur une température d'aspiration élevée qui ne sera rencontrée que quelques jours dans l'année.
- La puissance de compression est notablement réduite, à la fois par l'absence de l'essentiel des molécules d'eau et par l'aspiration plus froide.
- Le compresseur joue le rôle d'un mélangeur très efficace pour l'agent antigel dans le gaz à traiter. Cela est primordial en amont de l'unité de purification 9, car la teneur en eau résiduelle étant très faible (de l'ordre de quelques centaines de parties par million), la quantité d'agent antigel à injecter est aussi très faible, ce qui rend l'injection de l'agent antigel très délicate, car il faut s'assurer que le mélange soit très homogène (antigel dans le gaz).
- Il se trouve en effet que la fraction d'agent antigel restant en phase vapeur est sensiblement la même que la fraction d'eau et assure ainsi que les injections intermédiaires d'agent antigel sont superflues.
- On évite un coûteux équipement de séchage par adsorption.
- On évite la pénalité énergétique de la régénération de l'unité d'adsorption.

Une autre variante de l'invention consiste à considérer qu'en absence d'eau, les oxydes de soufre et les oxydes d'azote ne vont pas se condenser sous forme d'acide. En ce qui concerne l'acide nitrique, son point de rosée étant proche de celui de l'eau, la situation ne change pas, en première approximation, qu'on les considère ou pas. En ce qui concerne l'acide sulfurique, son point de rosée varie entre 70°C et 150°C environ selon les pressions et concentrations considérées.

L'invention permet de ne pas épurer le flux riche en CO₂ en oxyde de soufre avant la compression. Les oxydes de soufre seront alors soit séparés par lavage avec un liquide basique dans la colonne de séparation d'eau décrite plus loin, séparés à haute pression, par distillation par exemple, soit co-séquestrés avec le CO₂ si c'est l'application choisie pour le CO₂.

Le gain sur l'unité de production du gaz riche en CO₂ peut être considérable si l'on considère une centrale électrique au charbon où il deviendrait envisageable de ne pas retirer le SO₂ du flux qui sera extrait pour séquestration.

Il reste à mentionner le cycle de l'agent antigel. L'essentiel de l'agent antigel sera condensé avec l'eau, ainsi que d'autres impuretés du flux riche en CO₂. Une régénération de l'agent antigel est possible en utilisant un contacteur gaz/liquide, qui utilisera une partie du gaz riche en CO₂ pris avant toute injection d'agent antigel. Le contacteur permettra de récupérer la quasi-intégralité de l'agent antigel. Le gaz est alors mélangé avec le reste du gaz riche en CO₂ réduisant ainsi l'appoint en agent antigel aux fractions extrêmement réduites restant dans le produit et dans les condensats.

Les condensats peuvent être envoyés à la chaudière, si chaudière il y a, pour destruction des traces de l'agent antigel.

Enfin, les traces d'agent antigel et d'eau restant dans le produit riche en CO₂ ne devraient pas gêner la séquestration de ce dernier, ni même son utilisation pour de la récupération assistée de pétrole (Enhanced Oil Recovery). Il est à noter cependant que proche du point critique du CO₂ (74 bars absolus et 31,1°C) les agents antigel (en général des alcools, et notamment le méthanol) et l'eau forment des phases liquides indépendantes du CO₂ qui peut être soit liquide soit gazeux. Une récupération d'une fraction supplémentaire d'agent antigel accompagnant une amélioration de la pureté du produit CO₂ est donc à envisager.

Selon un objet de l'invention, il est prévu un procédé selon la revendication 1.

Selon d'autres objets facultatifs :
- le compresseur est en acier carbone ou faiblement allié.
- en aval du compresseur, on sépare le fluide comprimé à une température inférieure à la température de solidification de l'eau sans l'avoir séché par adsorption en amont, donc inférieure à 0°C à pression ambiante, préférablement inférieure à -10°C.
- on réduit la teneur en eau et/ou en d'autres impuretés du mélange extrait de la colonne de lavage avant de le renvoyer en tête de colonne.
- on épure le mélange extrait de la colonne de lavage par distillation dans une colonne d'épuration ayant un rebouilleur de cuve, on extrait un liquide contenant de l'eau et de l'antigel en cuve de la colonne d'épuration et on règle le taux de rebouillage en fonction de la teneur en antigel dans le mélange alimentant un tronçon de refroidissement de la colonne de lavage ou dans le liquide extrait en cuve de la colonne d'épuration.
- on épure le mélange extrait de la colonne de lavage par adsorption ou par perméation ou perévaporation ou tirage au vide.
- on refroidit le mélange d'eau et d'antigel, par exemple du méthanol, extrait de la colonne de lavage en utilisant des frigories provenant de I appareil de refroidissement et/ou d'épuration du fluide refroidi et comprimé dans le compresseur en utilisant au moins une des étapes suivantes :
   i) Vaporisation de CO₂ provenant d'un compresseur de production du CO₂ traité par l'appareil de refroidissement et/ou d'épuration.
   ii) Production de froid par un groupe frigorifique qui refroidit le fluide riche en CO₂ ou le fluide refroidi appauvri en eau ou un fluide dérivé d'un de ces fluides ou un fluide dont un de ces fluides est dérivé.
   iii) Utilisation du froid produit par la détente du fluide refroidi appauvri en eau, par exemple dans le cadre de d'une cryocondensation solide » ou d'une antisublimation.

Selon un autre objet de l'invention, il est prévu un appareil selon la revendication 8.

Selon d'autres objets facultatifs, l'appareil comprend
- des moyens d'épuration, autres que la colonne de lavage, reliés à la conduite pour soutirer le mélange et la conduite pour renvoyer un liquide dérivé du liquide refroidi en tête de colonne.
- le compresseur est en acier carbone ou acier faiblement allié.
- l'appareil comprend des moyens pour vaporiser du CO₂ provenant d'un compresseur de production du CO₂ traité dans l'appareil de refroidissement et/ou d'épuration adaptés à transférer des frigories jusqu'aux moyens de refroidissement du mélange extrait de la colonne de lavage pour refroidir le mélange.
- l'appareil comprend un groupe frigorifique capable de refroidir le fluide riche en CO₂ ou le fluide refroidi appauvri en eau ou un fluide dérivé d'un de ces fluides ou un fluide dont un de ces fluides est dérivé et capable de refroidir le mélange extrait de la colonne de lavage.
- l'appareil comprend des moyens pour détendre le fluide refroidi appauvri en eau où l'appareil de refroidissement est un appareil de cryocondensation solide ou d' antisublimation et des moyens pour transférer des frigories à partir des moyens pour détendre le fluide refroidi jusqu'aux moyens de refroidissement du mélange.
- Le fluide refroidi appauvri en eau comprimé dans le compresseur peut être refroidi et puis traité par lavage pour enlever des impuretés, telles que le NOx, le méthanol ou l'eau pour produire un liquide enrichi en impuretés et un gaz épuré.

Pour produire les frigories pour refroidir le mélange, on peut :
- Utiliser un compresseur de CO₂ purifié dans l'unité ou servant de cycle frigorifique, l'intérêt est de mutualiser un équipement pour plusieurs fonctions.
- Utiliser un groupe frigorifique existant sur le procédé (en amont ou en aval) (ammoniaque ou autre).
- Utiliser du froid produit par la détente du fluide traité, par exemple dans le cadre de la « cryocondensation solide » ou « antisublimation »

Eventuellement on peut prévoir le dégazage et recyclage dans le flux riche en CO₂ de l'antigel condensé, avec l'éventuelle eau entraînée après la colonne de refroidissement lors des étapes de compression et refroidissement du flux 55, ainsi que de l'antigel entraîné avec la purge d'eau 43 par mise en contact avec le flux riche en CO₂ en amont du refroidissement sous la température de 0°C.

Eventuellement on peut connecter en parallèle de n (n>=1) sections de dégazage de l'agent antigel pour augmenter le reflux liquide, le flux liquide passant successivement dans ces différentes sections avec pompage intermédiaire, le flux gazeux se répartissant équitablement entre les différentes sections.

Eventuellement on peut utiliser au moins un tronçon de garnissage en gaze permettant des taux de reflux faible dans un tronçon avec garnissage pour le dégazage du méthanol (tronçon C et D).

On peut prévoir l'extraction de condensats riches en antigel (méthanol par exemple) et eau dans l'unité cryogénique et recyclage de l'antigel comme décrit ci-dessus.

Le procédé est compatible avec des teneurs en SO₂ < 100ppm vol, même avec des teneurs en SO₂ < 2000ppm vol, voire avec des teneurs en SO₂ < 20000ppm vol dans le fluide riche en CO₂.

Après la compression du fluide appauvri en eau, il est possible de refroidir et de condenser le fluide. Dans ce cas et en présence de composés pouvant réagir avec le méthanol, comme les NOx par exemple, il est recommandé de diluer le fluide sous pression provenant de la compression avant la condensation par (fluide 64 sur les figures) :
- de l'eau et/ou
- de l'antigel, par exemple du méthanol et/ou
- du CO2 liquide

Il est envisageable de recycler au moins une partie du condensat produit par la condensation du fluide vers la colonne de lavage. Puisque le condensat est riche en méthanol et éventuellement NOx, il peut servir pour la neutralisation des SOx selon les réactions connues d'oxydation du SO₂ en SO₃ par le NO₂, permettant d'abattre le SO₃ avec de l'eau sous la forme d'acide sulfurique.

Autrement une partie du condensat peut être envoyée à une chaudière.

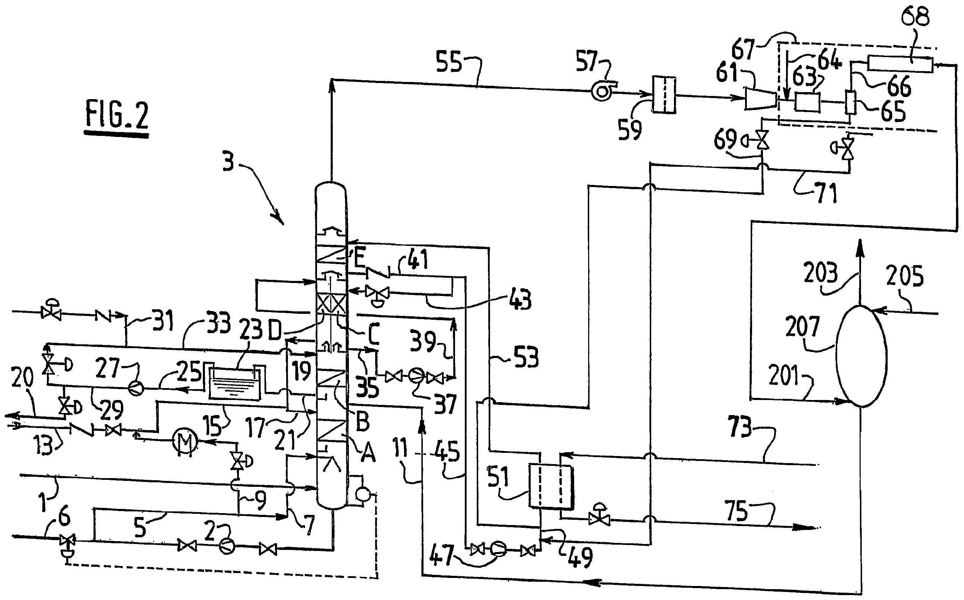

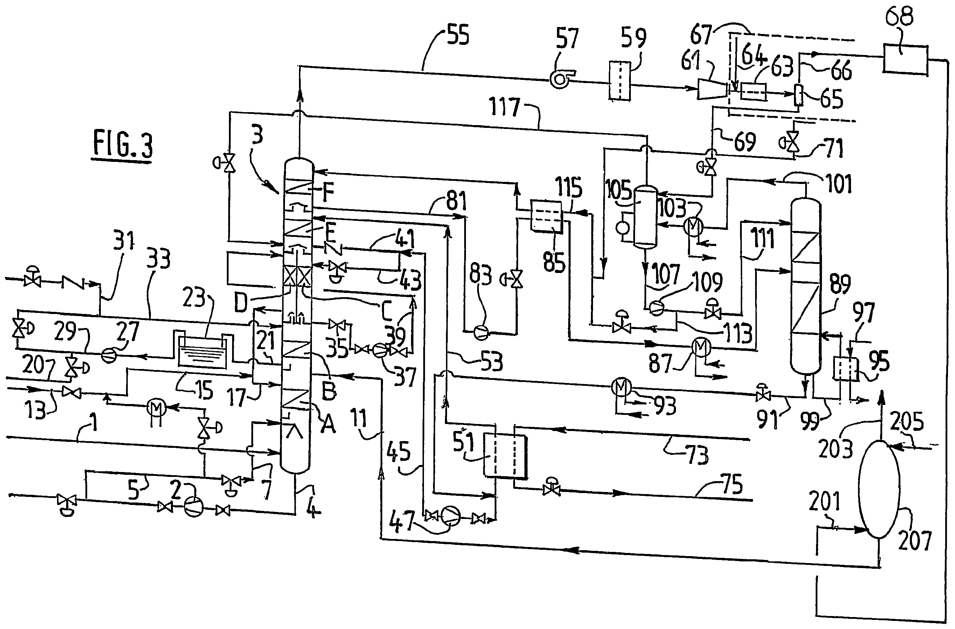

L'invention sera décrite en plus de détail en se référant aux figures, dont la Figure 2 et 3 illustrent des procédés selon l'invention.

Dans la Figure 2, un fluide 1 riche en CO₂ et humide est envoyé à une colonne de lavage 3 opérant à une pression inférieure à 10 bars, de préférence à la pression atmosphérique. Le fluide est d'abord humidifié par une arrivée d'eau 7. L'eau est extraite en cuve de la colonne 3, pompée par une pompe 2 et divisée en deux. Une partie 6 sert de purge et le reste 5 est divisé en deux pour former l'eau 7 rajoutée à la colonne 3 et un débit 9 mélangé avec une arrivée éventuelle d'eau 13. Le mélange formé sert à refroidir le fluide dans le tronçon A de la colonne par lavage avec l'eau. Un appoint d'agent basique 31 est rajouté au débit d'eau 33 qui lave le fluide dans le tronçon B. Le débit 33 est formé par un cycle comprenant la conduite 21 reliée à la colonne en dessous du tronçon B, un réservoir 23, des conduites 25 et 29 et une pompe 27. La boucle est purgée par le fluide 20. Ce lavage dans le tronçon B est optionnel et sert à enlever des SOX présents dans le fluide 1 ou d'autres acides forts qui ne seraient pas arrêtés par la simple mise en contact avec l'eau dans les tronçons inférieurs.

Les tronçons C, D, E servent à effectuer le refroidissement du gaz riche en CO₂ et la récupération de l'agent antigel, dans ce cas, du méthanol. Un débit d'eau mélangé avec 20% environ de méthanol est envoyé en tête de la colonne 3 à une température de -15°C via la conduite 53. Ce débit refroidit le gaz montant dans le tronçon E et un liquide enrichi en eau s'accumule en dessous de ce tronçon. Ce liquide 41 est soutiré et divisé en deux. Une partie 43 est renvoyée en tête du tronçon C qui constitue un tronçon de garnissage à section semi-circulaire séparé d'un autre tronçon à section semi-circulaire D par une partition. La partition peut aussi séparer les deux sections en deux zones concentriques. Tout le liquide renvoyé à la colonne est envoyé à la section C plutôt qu'à la section D pour assurer un fort taux de reflux dans la section C. Le liquide qui est descendu à travers le tronçon C est recueilli dans la conduite 35, pompé par la pompe 37 et renvoyé en tête du tronçon D. Le liquide 19 formé en dessous du tronçon D est envoyé en tête du tronçon A et comprend surtout de l'eau. Le reste du liquide extrait du tronçon E est évacué via la canalisation 45 puis pompé par la pompe 47 pour former le débit 49 auquel on a ajouté l'appoint d'agent antigel 71 et le retour des condensats contenant de l'agent antigel de la partie aval du procédé. Le fluide 49 est refroidi dans l'échangeur 51 au moyen d'un débit de CO₂ liquide 73 provenant d'un appareil d'épuration du gaz 55 produit en tête de la colonne 3. Le liquide 73 quitte l'échangeur 51 comme fluide 75. Le liquide refroidi 53 est envoyé en tête du tronçon E. Un gaz 55 contenant 1500ppm d'eau environ sort en tête de la colonne 3, est comprimé dans un compresseur 57 en acier carbone ou faiblement allié, épuré par une étape d'épuration fine 59 comme dans l'art antérieur (filtré), les organes de filtration peuvent aussi être constitués d'acier au carbone ou faiblement allié et ensuite le gaz est comprimé dans un compresseur 61 en acier carbone ou faiblement allié. Ensuite suivent éventuellement une épuration facultative du gaz riche en CO₂ de ses constituants légers (oxygène, argon, hydrogène, monoxyde de carbone, azote, etc.) et/ou de ses constituants plus lourds (NO₂, N₂O₄, SO₂, méthanol, eau, etc.), les variantes possibles de cette étape sont abondamment décrites dans de précédentes demandes de brevet et éventuellement une étape de compression du produit final riche en CO₂ ou de liquéfaction du produit final riche en CO₂ afin de le mettre à disposition d'un organe de transport (par canalisation ou bateau) ou pour son utilisation dans un procédé. Dans la figure, le gaz est refroidi dans un échangeur 63 et séparé dans un séparateur de phases 65. La partie gazeuse 66 est épurée et la partie liquide 69, contenant du méthanol et de l'eau, est renvoyée vers l'échangeur 51. Un débit d'appoint de méthanol 71 est également rajouté en amont de l'échangeur 51 pour compenser les pertes d'agent antigel via les purges liquides de la colonne 3 et dans le gaz 66.

Un débit de NO₂ de purge contenant du méthanol 11 est envoyé au-dessus du tronçon A et en dessous du tronçon B. Ce débit provient d'un appareil d'épuration de dioxyde de carbone situé en aval du pot de séparation de phase 65.

La Figure 3 illustre un procédé selon l'invention capable de produire un fluide riche en CO₂ plus sec que celui de la Figure 2.

Un fluide 1 riche en CO₂ et humide est envoyé à une colonne de lavage 3 opérant à une pression inférieure à 10 bars, de préférence à la pression atmosphérique. Le fluide est d'abord humidifié par une arrivée d'eau 7. L'eau est extraite en cuve de la colonne 3, pompée par une pompe 2 et divisée en deux. Une partie 6 sert de purge et le reste 5 est divisé en deux pour former l'eau 7 rajoutée à la colonne 3 et un débit 9 mélangé avec une éventuelle arrivée d'eau 13. Le mélange formé sert à refroidir le fluide dans le tronçon A de la colonne par mise en contact avec l'eau. Un appoint d'agent basique 31 est rajouté aux débits d'eau 33 qui lave le fluide dans le tronçon B. Le débit 33 est formé par un cycle comprenant la conduite 21 reliée à la colonne en dessous du tronçon B, un réservoir 23, une conduite 25 et une pompe 27. La boucle est purgée par le fluide 20. Ce lavage dans le tronçon B est optionnel et sert à enlever des SOX présents dans le fluide 1 ou d'autres acides forts qui ne seraient pas arrêtés par la simple mise en contact avec l'eau dans les tronçons inférieurs. Les tronçons C, D, E et F servent à effectuer le lavage à l'agent antigel, dans ce cas, du méthanol. Un débit 80 de 99% environ de méthanol mélangé avec un peu d'eau est envoyé en tête de la colonne 3 à une température de -15°C environ. Ce débit lave le gaz montant dans le tronçon F et un liquide enrichi en eau s'accumule en dessous de ce tronçon. Dans ce tronçon F, l'eau du gaz est absorbée dans le débit de lavage riche en méthanol. Ce liquide 81 est soutiré, pompé par la pompe 83, refroidi dans l'échangeur 85, réchauffé dans l'échangeur 87 et envoyé à un point intermédiaire d'une colonne d'épuration 89 fonctionnant comme colonne de distillation. La colonne 89 comprend un rebouilleur 95 et un condenseur de tête 103. Le liquide de cuve 99 est chauffé au moyen d'un débit de vapeur d'eau (ou d'eau chaude) 97 dans le rebouilleur 95 et renvoyé à la colonne 89. Le gaz de tête 101 se condense partiellement dans le condenseur 103 pour former un gaz 117 et un liquide 107 séparé dans un séparateur de phases 105. Le liquide 107 est renvoyé en partie à la colonne 89 comme liquide de reflux 111 et le reste 113 est envoyé à l'échangeur 85, mélangé à un appoint de méthanol 71 venant compenser les pertes de méthanol du système. Ensuite le débit 115 formé est envoyé en tête de la colonne de lavage 3 en deux.

Le gaz de tête 117 est envoyé en dessous du tronçon E.

Le liquide de cuve 91 de la colonne de distillation contenant de l'eau et du méthanol est refroidi une première fois dans l'échangeur 93 contre de l'au de refroidissement puis dans l'échangeur 51 contre le dioxyde de carbone 73 et renvoyé en tête du tronçon E.

Une partie 43 du liquide pris en dessous du tronçon E est renvoyée en tête du tronçon C qui constitue un tronçon de garnissage à section semi-circulaire séparé d'un autre tronçon à section semi-circulaire D par une partition. La partition peut aussi séparer les deux sections en deux zones concentriques. Tout le liquide renvoyé à la colonne est envoyé à la section C plutôt qu'à la section D pour assurer un fort taux de reflux dans la section C. De l'eau avec du méthanol 45 est pompé par la pompe 47 pour former le débit 49 et refroidi dans l'échangeur 51 au moyen d'un débit de CO₂ liquide 73 provenant d'un appareil d'épuration du gaz 55 produit en tête de la colonne 3 ainsi produisant du dioxyde de carbone réchauffé 75. Le liquide refroidi 53 produit en mélangeant les débits 45 et 91 est envoyé en tête du tronçon E. Le liquide qui est descendu à travers le tronçon C est recueilli dans la conduite 35, pompé par la pompe 37 et renvoyé en tête du tronçon D. Le liquide 19 formé en dessous du tronçon D est envoyé en tête du tronçon A et comprend surtout de l'eau. Un gaz 55 contenant 1 ppm d'eau environ sort en tête de la colonne 3, est comprimé dans un compresseur 57, épuré par une étape d'épuration fine 59 comme dans l'art antérieur (filtré) et ensuite le gaz est comprimé dans un compresseur 61 en acier carbone ou faiblement allié. Ensuite suivent éventuellement une épuration facultative du gaz riche en CO₂ de ses constituants légers (oxygène, argon, hydrogène, monoxyde de carbone, azote, etc.) et/ou de ses constituants plus lourds (NO₂, N₂O₄, SO₂, méthanol, etc.), les variantes possibles de cette étape sont abondamment décrites dans de précédentes demandes de brevet et éventuellement une étape de compression du produit final riche en CO₂ ou de liquéfaction du produit final riche en CO₂ afin de le mettre à disposition d'un organe de transport (par canalisation ou bateau) ou pour son utilisation dans un procédé. Dans la figure, le gaz est refroidi dans un échangeur 63 et séparé dans un séparateur de phases 65. La partie gazeuse 66 est épurée et la partie liquide 69, contenant du méthanol et de l'eau, est renvoyée vers le séparateur de phases 105.

Afin de réguler la quantité de méthanol envoyé à la colonne de lavage 3, le taux de rebouillage du rebouilleur 95 peut être modifié en fonction de la teneur en méthanol mesuré pour un débit du système, en particulier le débit 115, le débit 53, le débit 81 ou le débit 41.

La boucle de méthanol constituée par le débit 81 et le débit 113 doit être épurée pour retirer l'eau prélevée dans le tronçon F sur le gaz riche en CO₂ mais aussi les éventuelles autres impuretés qui pourraient s'accumuler dans la boucle (H₂S, O₂, CO₂, HCl, etc). Il y a plusieurs façons d'épurer la boucle de méthanol :
1) Dégazage de méthanol de la purge d'eau en utilisant le gaz d'alimentation (Figure 3)
   1-1=> Le système de dégazage de méthanol est intégré dans la tour de refroidissement du débit d'alimentation, qui sert également à enlever les SOx et/ou NOx.
      De cette manière, aucun ventilateur supplémentaire n'est requis, la température du gaz de dégazage est abaissée grâce au débit augmenté et une seule tour peut être utilisée pour cumuler les fonctions de refroidissement (tronçon A), épuration de NOx-SOx (tronçon B), dégazage de méthanol, (tronçons C et D), refroidissement pour abaisser le point de rosée (tronçon E) et lavage au méthanol pour réduction d'eau au niveau du ppm (tronçon F).
   1-2=> Grâce au rapport très bas entre le liquide et le gaz quand tout le gaz d'alimentation sert à dégazer la purge d'eau, les éléments suivants peuvent servir à établir l'échange de matière et de chaleur entre le gaz et le liquide :
      - plateaux de distillation
      - garnissages en gaze
      - sections parallèles pour le gaz avec le liquide qui s'écoule en série d'une section à une autre.
2) Lavage du gaz avec du C02 liquide dans une boîte froide
3) Adsorbants (toutes sortes: zéolite, charbon actif, etc.) sur les purges de gaz ou de liquide
4) Membrane sur circuit de liquide ou purge
5) Détente rapide de liquide sous vide
6) Perévaporation (système à membranes utilisé autrement pour la séparation d'alcool et d'eau en phases liquide

Après le compresseur 68 des Figures 2 et 3, lors de la condensation du gaz riche en CO₂ et contenant du méthanol, les composés les plus lourds vont se concentrer dans les premières gouttes de condensation. Si le gaz traité contient des NOx, le NO va s'oxyder au moins partiellement en NO₂ ou N₂O₄ avec l'oxygène du gaz. La réaction d'oxydation étant accélérée lors d'une élévation de la pression et d'un abaissement de la température, du NO₂ sera présent dans les premières gouttes de condensation s'il y a des NOx dans le gaz traité. Le méthanol va se condenser aussi dès les premières gouttes.

Il est connu que le méthanol et les NOx peuvent réagir selon de multiples mécanismes, tant en phase gaz qu'en phase liquide, certaines réactions impliquant l'eau et/ou l'acide nitrique, d'autres uniquement le méthanol et le NO₂. Les composés ainsi formés peuvent être réactifs.

On peut notamment citer les réactions suivantes :
- 2NO₂ +CH₃OH ⇆ CH₃ONO₂ + HNO₂
- HCOOH +HNO₃ ⇆ 3CO₂+4H₂O+NO
- N₂O₄ +CH₃OH ⇆ CH₃ONO + HNO₃
- 6HNO₃ + 5CH₃OH ⇆ 5CO₂+13 H₂O+3N₂

Une façon de limiter l'impact de ces réactions est de diluer les oxydes d'azote dans les premières gouttes de condensation. Pour ce faire, on peut injecter en 64 en amont de l'échangeur 63 sur les figures, de l'eau ou du méthanol ou du CO₂ liquide en quantité suffisante pour réduire la teneur de NOx dans les phases liquides.

Chaque solution de dilution possède ses inconvénients (pertes de produit « noble » comme le méthanol, pertes frigorifiques en cas de mise en contact de CO₂ liquide (environ -20°C dans notre exemple où le flux est traité à 20bars) avec un gaz à 5°C, risques de corrosion en cas d'ajout d'eau, etc.).

Le gaz d'alimentation 55, après l'étape de refroidissement dans la colonne 3 et une première compression avec le compresseur 61 peut être introduit dans la boite froide 67 et refroidi dans les échangeurs 63 et 67. Il peut y avoir un premier pot de condensation partielle 65 où une grande part du méthanol, et de l'eau s'il en reste, est condensée et recyclé vers la colonne à basse pression comme fluide 69.

Après l'échangeur 67, le gaz refroidi 201 va être lavé des traces de méthanol, eau et NOx éventuellement, ainsi que de tout autre composé plus lourds que le CO₂ dans une colonne à garnissage 207. Le gaz 201 est introduit en cuve et du CO₂ liquide pur 205 (c'est-à-dire épuré des composés lourds) est injecté pour assurer le reflux en tête de colonne. Le liquide de cuve 11 de la colonne 207 est recyclé vers la colonne 3 entre les tronçons A et B pour y récupérer le méthanol, l'eau sera purgée comme décrit précédemment. On peut aussi envisager d'y neutraliser les NOx avec une solution basique (tronçon B).

Notons qu'en amont de la première condensation dans le pot séparateur 65, on peut injecter un fluide pour diluer les NOx dans les phases liquides. Ce fluide 64 de dilution peut être de l'eau, du CO₂ liquide ou du méthanol.

Les condensats 69 éventuellement chargés en produits de réaction « NOx + Méthanol » peuvent être recyclés vers la tour de lavage 3, le NO₂ pourra réagir avec l'eau présente et former de l'acide nitrique qui pourrait être neutralisé dans le tronçon facultatif B, le méthanol pourra être dégazé par le gaz riche en CO₂ montant de la section A et ainsi être recyclé dans le procédé. Une autre façon de gérer ces condensats est de les incinérer dans la chaudière, ce qui augmente le besoin d'appoint en méthanol mais limite les risques posés par le recyclage des produits de réaction « NOx + méthanol ».

## Revendications

1. Procédé de compression d'un fluide riche en CO₂ contenant entre 1 % molaire et 100 % molaire en base sèche de CO₂ ainsi que de l'eau dans lequel, le fluide riche en CO₂ contenant de l'eau est envoyé à une colonne de lavage (3) alimentée, de préférence en tête, par un mélange (53) d'eau et d'antigel où il se refroidit et est séparé de l'eau et le fluide refroidi appauvri en eau est extrait en tête de la colonne, on extrait un mélange d'eau et d'antigel (41) dans la colonne à un niveau en dessous de la tête, et de l'eau est extraite de la cuve de la colonne **caractérisé en ce que** le fluide riche en CO₂ extrait en tête de la colonne est comprimé dans un compresseur (61), en aval de la colonne de lavage, le fluide (55) comprimé dans le compresseur est refroidi et/ou épuré dans un appareil de refroidissement et/ou d'épuration (63) et on refroidit le mélange extrait de la colonne, en utilisant des frigories provenant de l'appareil de refroidissement et/ou d'épuration avant de le renvoyer en tête de colonne.

2. Procédé selon la revendication 1 dans lequel le compresseur (61) est en acier carbone ou faiblement allié.

3. Procédé selon l'une des revendications précédentes dans lequel, en aval du compresseur (61), on sépare le fluide comprimé à une température inférieure à la température de solidification de l'eau, par exemple 0°C à pression ambiante, préférablement inférieure à -10°C sans l'avoir séché par adsorption en amont.

4. Procédé selon l'une des revendications précédentes dans lequel on réduit la teneur en eau et/ou en d'autres impuretés du mélange extrait de la colonne de lavage avant de le renvoyer en tête de colonne.

5. Procédé selon la revendication 4 dans lequel on épure le mélange par distillation dans une colonne d'épuration (89) ayant un rebouilleur de cuve (95), on extrait un liquide contenant de l'eau et de l'antigel en cuve de la colonne d'épuration et on règle le taux de rebouillage en fonction de la teneur en antigel dans le mélange alimentant un tronçon de refroidissement (E) de la colonne de lavage ou dans le liquide extrait en cuve de la colonne d'épuration.

6. Procédé selon l'une des revendications 1 à 5 dans lequel on épure le mélange extrait de la colonne de lavage par adsorption ou par perméation ou perévaporation ou tirage au vide.

7. Procédé selon l'une des revendications précédentes dans lequel on refroidit le mélange d'eau et d'antigel extrait de la colonne de lavage en utilisant des frigories provenant de l'appareil de refroidissement et/ou d'épuration (63) du fluide (55) refroidi et comprimé dans le compresseur (61) en utilisantau moins une des étapes suivantes :
i) Vaporisation de CO₂ provenant d'un compresseur de production du CO₂ traité par l'appareil de refroidissement et/ou d'épuration.
ii) Production de froid par un groupe frigorifique qui refroidit le fluide riche en CO₂ ou le fluide refroidi appauvri en eau ou un fluide dérivé d'un de ces fluides ou un fluide dont un de ces fluides est dérivé.
iii) Utilisation du froid produit par la détente du fluide refroidi appauvri en eau, par exemple dans le cadre de d'une cryocondensation solide » ou d'une antisublimation.

8. Appareil de traitement d'un fluide riche en CO₂ contenant entre 1 % molaire et 100 % molaire en base sèche de CO₂ ainsi que de l'eau comprenant une colonne (3) de lavage du fluide riche en CO₂, une conduite d'amenée (53) d'un mélange d'agent anti-gel et d'eau reliée à un niveau supérieur de la colonne, une conduite (1) d'amenée du fluide riche en CO₂ contenant de l'eau reliée à un niveau inférieure de la colonne, une conduite (4) pour extraire de l'eau de la cuve de la colonne, une conduite (41) pour soutirer un mélange d'eau et d'agent anti-gel de la colonne reliée à un niveau intermédiaire de la colonne, des moyens de refroidissement (51) reliés à la conduite pour soutirer le mélange et à la conduite d'amenée du mélange et une conduite pour renvoyer le liquide refroidi ou un liquide dérivé du liquide refroidi qui est la conduite d'amenée du mélange d'agent antigel et d'eau **caractérisé en ce qu'**il comprend un compresseur (61), un appareil (63) de refroidissement et/ou d'épuration du fluide comprimé dans le compresseur (61) et des moyens (55) pour envoyer le fluide refroidi épuré en eau extrait en tête de la colonne au compresseur, les moyens de refroidissement (51) étant adaptés pour récupérer des frigories provenant de l'appareil (63) de refroidissement et/ou d'épuration du fluide comprimé dans le compresseur (61).

9. Appareil selon la revendication 8 comprenant des moyens d'épuration (89), autres que la colonne de lavage, reliés à la conduite pour soutirer le mélange et la conduite pour renvoyer un liquide dérivé du liquide refroidi en tête de colonne.

10. Appareil selon la revendication 8 ou 9 dans lequel le compresseur (61) est en acier carbone ou acier faiblement allié.

11. Appareil selon l'une des revendications 8 à 10 comprenant des moyens pour vaporiser du CO₂ provenant d'un compresseur de production du CO₂ traité dans l'appareil de refroidissement et/ou d'épuration adaptés à transférer des frigories jusqu'aux moyens de refroidissement du mélange pour refroidir le mélange.

12. Appareil selon l'une des revendications 8 à 11 comprenant un groupe frigorifique capable de refroidir le fluide riche en CO₂ ou le fluide refroidi appauvri en eau ou un fluide dérivé d'un de ces fluides ou un fluide dont un de ces fluides est dérivé et capable de refroidir le mélange.

13. Appareil selon l'une des revendication 8 à 12 comprenant des moyens pour détendre le fluide refroidi appauvri en eau où l'appareil de refroidissement est un appareil de cryocondensation solide ou d'antisublimation et des moyens pour transférer des frigories à partir des moyens pour détendre le fluide refroidi jusqu'aux moyens de refroidissement du mélange.

## Patentansprüche

1. Verfahren zum Verdichten eines CO₂-reichen Fluides, das zwischen 1 Mol-% und 100 Mol-% CO₂-Trockenbasis sowie Wasser enthält, bei dem das Wasser enthaltende CO₂-reiche Fluid einer Waschkolonne (3) zugeführt wird, die bevorzugt am Kopf mit einem Gemisch (53) aus Wasser und Frostschutzmittel gespeist wird, wo es abkühlt und vom Wasser abgetrennt wird, und das abgekühlte wasserabgereicherte Fluid am Kopf der Kolonne abgezogen wird, ein Gemisch aus Wasser und Frostschutzmittel (41) in der Kolonne auf einer Höhe unterhalb des Kopfes abgezogen wird, und Wasser vom Sumpf der Kolonne abgezogen wird, **dadurch gekennzeichnet, dass** das am Kopf der Kolonne abgezogene CO2-reiche Fluid in einem Verdichter (61) stromabwärts der Waschkolonne verdichtet wird, das im Verdichter verdichtete Fluid (55) in einer Kühl- und/oder Reinigungsvorrichtung (63) gekühlt und/oder gereinigt wird, und das aus der Kolonne abgezogene Gemisch unter Verwendung von Kältemitteln, die aus der Kühl- und/oder Reinigungsvorrichtung stammen, gekühlt wird, bevor es in den Kopf der Kolonne zurückgeführt wird.

2. Verfahren nach Anspruch 1, bei dem der Verdichter (61) aus Kohlenstoff- oder niedrig legiertem Stahl ist.

3. Verfahren nach einem der vorstehenden Ansprüche, bei dem das verdichtete Fluid stromabwärts des Verdichters (61) bei einer Temperatur unter der Verfestigungstemperatur des Wassers, zum Beispiel 0 °C bei Umgebungsdruck, bevorzugt unter -10 °C, abgetrennt wird, ohne es stromaufwärts durch Adsorption getrocknet zu haben.

4. Verfahren nach einem der vorstehenden Ansprüche, bei dem der Gehalt an Wasser und/oder an sonstigen Verunreinigungen des aus der Waschkolonne abgezogenen Gemisches reduziert wird, bevor es in den Kopf der Kolonne zurückgeführt wird.

5. Verfahren nach Anspruch 4, bei dem das Gemisch durch Destillation in einer Reinigungskolonne (89), die einen Sumpfverdampfer (95) aufweist, gereinigt wird, eine Wasser und Frostschutzmittel enthaltende Flüssigkeit am Sumpf der Reinigungskolonne abgezogen wird und die Verdampfungsrate abhängig vom Frostschutzmittelgehalt in dem Gemisch, das einen Kühlabschnitt (E) der Waschkolonne speist, oder in der am Sumpf der Reinigungskolonne abgezogenen Flüssigkeit geregelt wird.

6. Verfahren nach einem der Ansprüche 1 bis 5, bei dem das aus der Waschkolonne abgezogene Gemisch durch Adsorption oder durch Permeation oder Perevaporation oder Evakuierung gereinigt wird.

7. Verfahren nach einem der vorstehenden Ansprüche, bei dem das aus der Waschkolonne abgezogene Gemisch aus Wasser und Frostschutzmittel unter Verwendung von Kältemitteln, die aus der Kühl- und/oder Reinigungsvorrichtung (63) des gekühlten und im Verdichter (61) verdichteten Fluides (55) stammen, unter Verwendung von mindestens einem der folgenden Schritte gekühlt wird:
i) Verdampfen von CO₂, das aus einem Verdichter zur Herstellung des von der Kühl- und/oder Reinigungsvorrichtung behandelten CO₂ stammt.
ii) Erzeugen von Kälte durch ein Kälteaggregat, das das CO₂-reiche Fluid oder das gekühlte wasserabgereicherte Fluid oder ein aus einem dieser Fluide abgeleitetes Fluid oder ein Fluid, aus dem eines dieser Fluide abgeleitet ist, kühlt.
iii) Verwenden der durch die Expansion des gekühlten wasserabgereicherten Fluides erzeugten Kälte, zum Beispiel im Rahmen einer "Feststoffkryokondensation" oder einer Anti-Sublimation.

8. Vorrichtung zum Behandeln eines CO₂-reichen Fluides, das zwischen 1 Mol-% und 100 Mol-% CO₂-Trockenbasis sowie Wasser enthält, umfassend eine Waschkolonne (3) des CO₂-reichen Fluides, eine Zulaufleitung (53) eines Gemisches aus Frostschutzmittel und Wasser, die auf einer oberen Höhe der Kolonne angeschlossen ist, eine Zulaufleitung (1) des Wasser enthaltenden CO₂-reichen Fluides, die auf einer unteren Höhe der Kolonne angeschlossen ist, eine Leitung (4) zum Abziehen von Wasser aus dem Sumpf der Kolonne, eine Leitung (41) zum Abzapfen eines Gemisches aus Wasser und Frostschutzmittel aus der Kolonne, die auf einer Zwischenhöhe der Kolonne angeschlossen ist, Kühlmittel (51), die an die Leitung zum Abzapfen des Gemisches und an die Zulaufleitung des Gemisches angeschlossen sind, und eine Leitung zum Zurückführen der gekühlten Flüssigkeit oder einer aus der gekühlten Flüssigkeit abgeleiteten Flüssigkeit, die die Zulaufleitung des Gemisches aus Frostschutzmittel und Wasser ist, **dadurch gekennzeichnet, dass** sie einen Verdichter (61), eine Kühl- und/oder Reinigungsvorrichtung (63) des in dem Verdichter (61) verdichteten Fluides und Mittel (55) zum Zuführen des gekühlten, von Wasser gereinigten, am Kopf der Kolonne abgezogenen Fluides zum Verdichter umfasst, wobei die Kühlmittel (51) dazu ausgebildet sind, die aus der Kühl- und/oder Reinigungsvorrichtung (63) des im Verdichter (61) verdichteten Fluides stammenden Kältemittel zurückzugewinnen.

9. Vorrichtung nach Anspruch 8, umfassend andere Reinigungsmittel (89) als die Waschkolonne, die an die Leitung zum Abzapfen des Gemisches und die Leitung zum Zurückführen einer aus der gekühlten Flüssigkeit abgeleiteten Flüssigkeit am Kopf der Kolonne angeschlossen sind.

10. Vorrichtung nach Anspruch 8 oder 9, bei der der Verdichter (61) aus Kohlenstoffstahl oder niedrig legiertem Stahl ist.

11. Vorrichtung nach einem der Ansprüche 8 bis 10, umfassend Mittel zum Verdampfen des CO₂, das aus einem Verdichter zur Herstellung des in der Kühl- und/oder Reinigungsvorrichtung behandelten CO₂ stammt, die dazu ausgebildet sind, Kältemittel bis zu den Kühlmitteln des Gemisches zu transferieren, um das Gemisch zu kühlen.

12. Vorrichtung nach einem der Ansprüche 8 bis 11, umfassend ein Kälteaggregat, das in der Lage ist, das CO₂-reiche Fluid oder das gekühlte wasserabgereicherte Fluid oder ein aus einem dieser Fluide abgeleitetes Fluid oder ein Fluid, aus dem eines dieser Fluide abgeleitet ist, zu kühlen, und in der Lage ist, das Gemisch zu kühlen.

13. Vorrichtung nach einem der Ansprüche 8 bis 12, umfassend Mittel zum Expandieren des gekühlten wasserabgereicherten Fluides, bei der die Kühlvorrichtung eine Feststoffkryokondensations- oder Anti-Sublimationsvorrichtung ist, und Mittel zum Transferieren der Kältemittel von den Mitteln zum Expandieren des abgekühlten Fluides zu den Kühlmitteln des Gemischs.

## Claims

1. Method for compressing a fluid rich in CO₂ containing between 1% molar and 100% molar in a dry CO₂ base, as well as water wherein, the fluid rich in CO₂ containing the water is sent to a washing column (3) supplied, preferably at the top, by a mixture (53) of water and antifreeze where it is chilled and is separated from the water and the chilled fluid depleted in water is extracted at the top of the column, a mixture of water and antifreeze (41) is extracted in the column at a level below the top, and the water is extracted from the tank of the column, **characterised in that** the fluid rich in CO₂ extracted at the top of the column is compressed in a compressor (61), downstream of the washing column, the fluid (55) compressed in the compressor is chilled and/or purified in a chilling and/or purification device (63) and the mixture extracted from the column is chilled, by using frigories coming from the chilling and/or purification device before sending it back to the top of the column.

2. Method according to claim 1 wherein the compressor (61) is made of carbon steel or low alloy steel.

3. Method according to one of the preceding claims wherein, downstream of the compressor (61), the fluid compressed at a temperature less than the water solidification temperature is separated, for example, 0°C at general pressure, preferable less than -10°C without having it dried through adsorption beforehand.

4. Method according to one of the preceding claims wherein the water content and/or other impurities of the mixture extracted from the washing column are reduced, before sending it back to the top of the column.

5. Method according to claim 4 wherein the mixture is purified through distillation in a purification column (89) having a tank reboiler (95), a liquid containing water and antifreeze in the tank is extracted from the purification column, and the reboiling rate is adjusted according to the content of antifreeze in the mixture supplying a chilling section (E) of the washing column or in the liquid extracted in the tank of the purification column.

6. Method according to one of the claims 1 to 5 wherein the mixture extracted from the washing column is purified by adsorption or by permeation or pervaporation or evacuation.

7. Method according to one of the preceding claims wherein the mixture of water and antifreeze extracted from the washing column is chilled by using frigories coming from the chilling and/or purification device (63) of the fluid (55) chilled and compressed in the compressor (61) by using at least one of the following steps:
i) CO₂ evaporation coming from a compressor producing CO₂ processed by the chilling and/or purification device.
ii) Cold production by a reefer unit which chills the fluid rich in CO₂ or the chilled fluid depleted in water or a fluid that has derived from one of these fluids or a fluid or which one of these fluids has derived from.
iii) Use of the cold produced by the recreation of the chilled fluid depleted in water, for example as part of "solid cryo-condensation" or anti-sublimation.

8. Device for processing a fluid rich in CO₂ containing between 1% molar and 100% molar in a dry CO₂ base, as well as water comprising a washing column (3) of fluid rich in CO₂, an intake pipe (53) of an antifreeze agent and water mixture, connected to an upper level of the column, an intake pipe (1) of fluid rich in CO₂ containing water connected to a lower level of the column, a pipe (4) to extract water from the tank of the column, a pipe (41) to extract a water and antifreeze agent mixture from the column connected to an intermediary level of the column, the chilling means (51) connected to the pipe to extract the mixture and connected to the intake pipe from the mixture and a pipe to send back the chilled liquid or a liquid derived from the chilled liquid which is the intake pipe of the antifreeze agent and water mixture, **characterised in that** it comprises a compressor (61), a device (63) for chilling and/or purifying the fluid compressed in the compressor (61) and means (55) to send the fluid chilled and purified in water extracted at the top of the column to the compressor, the chilling means (51) being adapted to recover the frigories coming from the device (63) for chilling and/or purifying the fluid compressed in the compressor (61).

9. Device according to claim 8 comprising purification means (89), other than the washing column, connected to the pipe to extract the mixture and the pipe to send back a liquid derived from the liquid chilled at the top of the column.

10. Device according to claim 8 or 9 wherein the compressor (61) is made from carbon steel or low alloy steel.

11. Device according to one of the claims 8 to 10 comprising means to evaporate the CO₂ coming from a CO₂ production compressor, processed in the chilling and/or purification device adapted to transfer the frigories up to the means for chilling the mixture to chill the mixture.

12. Device according to one of the claims 8 to 11 comprising a reefer unit capable of chilling the fluid rich in CO₂ or the chilled fluid depleted in water or a fluid derived from one of these fluids or a fluid of which one of these fluids is derived and capable of chilling the mixture.

13. Device according to one of the claims 8 to 12 comprising means to recreate the chilled fluid depleted in water where the chilling device is a solid cryo-condensation or an anti-sublimation device and the means to transfer the frigories from the means for recreating the chilled fluid up to the means for chilling the mixture.
